# FASCICULE DE BREVET EUROPEEN

(11) **EP 0 707 533 B1**
(45) Date de publication et mention de la délivrance du brevet: **25.11.1998**
(21) Numéro de dépôt: 95919466.3
(22) Date de dépôt: 02.05.1995
(51) Int. Cl.: B29C 45/14

(54) **PROCEDE DE FABRICATION D'UN OBJET MULTICOUCHE PAR MOULAGE ET MOULE DE FABRICATION D'UN TEL OBJET**
VERFAHREN ZUR HERSTELLUNG EINES MEHRSCHICHTIGEN GEGENSTANDES DURCH GIESSEN UND FORM ZUR HERSTELLUNG EINES SOLCHEN GEGENSTANDES
METHOD FOR THE MANUFACTURE OF A MULTILAYERED OBJECT BY MOULDING AND MOULD FOR THE MANUFACTURE OF SUCH AN OBJECT

(30) Priorité: 03.05.1994 FR 9404406
(43) Date de publication de la demande: 24.04.1996
(73) Titulaire: REYDEL Société Anonyme, F-59147 Gondecourt (FR)
(72) Inventeur: D'HOOREN, Jean-Jacques, F-59147 Gondecourt (FR)
(74) Mandataire: Duthoit, Michel
(86) Numéro de dépôt international: FR9500570
(87) Numéro de publication internationale: WO9529801

(56) Documents cités:
- EP-A- 0 186 016
- EP-A- 0 531 977
- EP-A- 0 581 035
- GB-A- 2 195 940

## Description

L'invention est relative à un procédé de fabrication d'un objet multicouche par moulage et à un moule de fabrication d'un tel objet autorisant la mise en oeuvre dudit procédé de fabrication.

Bien qu'ayant été développée plus spécialement pour réaliser des pièces dans le domaine automobile, il est néanmoins à noter que la présente invention pourra s appliquer à tout domaine dans lequel on utilise des objets aux formes diverses obtenus par moulage de matière thermo-plastique.

On connaît divers procédés de moulage, par injection, qui permettent d'arriver à des objets présentant au moins une couche interne, à base de résine thermo-plastique, recouverte d'une feuille de revêtement, de matière thermo-plastique ou textile.

En particulier, on connaît une technique de moulage par injection-compression, et dans ce cas, dans un moule de forme complémentaire, on maintient une feuille de matière thermo-plastique, ou textile, appelée généralement "peau" qui constituera la face externe de l'objet. Ensuite, dans le moule entrouvert, on injecte, sous la dite "peau", de la résine thermo-plastique, pour constituer la couche interne de l'objet, couche qui va donner du volume et de la tenue à l'objet ainsi qu'une certaine résistance.

Compte tenu des caractéristiques de ces procédés de moulage, la "peau" est donc solidaire d'une des faces de la couche interne de l'objet et est dépassante de cette surface afin d'autoriser une étape complémentaire de finition.

Dans ce cas, l'objet est repris manuellement par un opérateur qui va enduire la partie périphérique de la peau dépassante, avec de la colle, ce après une étape de dégraissage. Puis l'opérateur va appliquer la peau sur la partie inférieure de la couche interne pour, en quelque sorte, border l'objet. Finalement, les exédents de peau sont découpés également manuellement, lors d'une troisième étape.

Une telle technique de moulage par injection-compression est intéressante puisqu'il est possible d'arriver à des effets esthétiques remarquables tout en utilisant des matériaux permettant d'arriver à un coût de revient acceptable.

Cependant, il est à noter que les étapes de reprise de rembordement et de découpe manuelle augmentent très sensiblement le coût de revient.

On connaît du document EP-A-0.186.016 un procédé de fabrication d'un objet multicouche par moulage, ledit objet présentant au moins une couche interne, à base de résine thermoplastique, recouverte d'une feuille de revêtement de matière thermo-plastique ou textile, procédé par lequel
- on place dans un moule, équipé d'un poinçon et d'une matrice, ladite feuille de revêtement en débordement, avec un débord, au moins partiel, par rapport au moule,
- on injecte, sous ladite feuille de revêtement de la résine thermo-plastique
- on répartit sous la feuille de revêtement la résine thermoplastique, pour constituer ladite couche interne,
- on applique le débord de la feuille de revêtement vers le moule.

Toutefois, selon ce procédé, la cavité de moulage est maintenue hermétiquement close et la pression s'exerçant sur la feuille de revêtement est très élevée. Celle-ci est donc susceptible d'être endommagée.

On connaît également des documents EP-A-0.581.035 et GB-A-2.195.940 des procédés permettant de remborder automatiquement la périphérie d'un panneau comprenant un insert et une peau.

Toutefois, ledit insert n'est pas injecté sous la peau mais est constitué à partir d'un panneau laminé préalablement formé puis disposé dans le moule avant d'être pressé contre la peau.

Le but de la présente invention est de proposer un procédé de fabrication d'un objet multicouche par moulage, ce dernier présentant au moins une couche interne, à base de résine thermo-plastique, recouverte d'une feuille de revêtement, de matière thermo-plastique ou textile, qui permette de pallier les inconvénients précités, et qui évite notamment des reprises manuelles de finition de l'objet en autorisant lors de la fabrication un rembordement automatique.

A ce sujet, le procédé de la présente invention permet, à l'issue de la phase de fabrication traditionnelle d'un objet multicouche par moulage, de replier le débord de la feuille de revêtement sous l'objet, et éventuellement d'autoriser la découpe du surplus de matière.

Un autre but de la présente invention est de proposer un moule de fabrication d'un tel objet multicouche, autorisant la mise en oeuvre du procédé de fabrication de la présente invention, qui met en oeuvre des moyens pour éviter une reprise manuelle ultérieure de l'objet multicouche et, lors' de la phase de moulage, d'autoriser le rembordement automatique et/ou la découpe périphérique du surplus de feuille de revêtement.

Un autre but de la présente invention est de proposer un procédé et un moule de fabrication d'un tel objet multicouche qui puissent être mis en oeuvre lors d'un moulage par injection basse pression ou lors d'un moulage par injection compression.

D'autres buts et avantages de la présente invention apparaîtront au cours de la description qui va suivre qui n'est cependant donnée qu'à titre indicatif et qui n'a pas pour but de la limiter.

Selon l'invention, le procédé de fabrication d'un objet multicouche par moulage, ledit objet présentant au moins une couche interne à base de résine thermoplastique, recouverte d'une feuille de revêtement de matière thermo-plastique ou textile, procédé par lequel
- on place dans un moule, équipé d'un poinçon et d'une matrice, ladite feuille de revêtement en débordement, avec un débord, au moins partiel, par rapport au moule,
- on injecte, sous ladite feuille de revêtement la résine thermoplastique
- on répartit sous la feuille de revêtement la résine thermoplastique, pour constituer ladite couche interne,
- on applique le débord de la feuille de revêtement vers le moule,
   est caractérisé par le fait que :
- on prévoit et on maintient un jeu entre une chant du poinçon et une partie femelle de la matrice
- on crée une réserve de résine thermo-plastique, dans la partie périphérique de l'objet, sous le débord de la feuille de revêtement lors de la répartition de la résine, par adhésion mutuelle
- on prend en sandwich ladite réserve entre la feuille de revêtement et une partie du moule, jusqu'à la prise de la résine.

Le moule de fabrication d'un objet multicouche, autorisant la mise en oeuvre du procédé de fabrication selon la présente invention, ledit objet présentant au moins une couche interne, à base de résine thermo-plastique, recouverte d'une feuille de revêtement, de matière thermo-plastique ou textile, ledit moule comprenant au moins une matrice et un poinçon coopérant pour donner à l'objet sa configuration et aptes à recevoir ladite feuille de revêtement en débordement avec un débord au moins partiel, par rapport au moule, ainsi que des moyens pour appliquer ledit débord de la feuille de revêtement vers le moule, est caractérisé par le fait qu'il comporte des moyens pour créer une réserve de résine thermo-plastique dans la partie périphérique de l'objet et que les moyens pour appliquer le débord de la feuille de revêtement vers le moule sont prévus pour prendre en sandwich ladite réserve entre la feuille de revêtement et une partie du moule, un jeu étant prévu et maintenu entre un chant du poinçon et une partie femelle de la matrice.

Cela étant, la présente invention sera mieux comprise à la lecture de la description suivante accompagnée des dessins en annexe qui en font partie intégrante.

Les figures 1a à 1e montrent schématiquement les différentes étapes du procédé de fabrication d'un objet multicouche par moulage selon la présente invention.

La figure 2 montre une coupe partielle d'un moule de fabrication selon la présente invention, la matrice et le poinçon étant entrouverts.

La figure 3 montre le moule illustré à la figure 2 dans la phase d'injection de la résine thermo-plastique sous la couche de revêtement.

La figure 4 montre le moule de la figure 2 dans une phase de compression.

La figure 5 montre la dernière étape du procédé de la présente invention mise en oeuvre dans le moule illustré à la figure 2.

L'invention vise un procédé de fabrication d'un objet multicouche par moulage, ainsi qu'à un moule de fabrication d'un tel objet, autorisant la mise en oeuvre dudit procédé.

Bien que plus spécialement développée dans le cadre de l'industrie automobile, la présente invention s'appliquera à tous types d'objets réalisés par moulage de matière plastique.

La compréhension du procédé de la présente invention s'effectuera à la vue des figures la à le qui montrent schématiquement le principe de moulage de la présente invention, dans un moule qui présente généralement une partie mâle 1 ou poinçon, et une partie femelle 2 ou matrice complémentaires, qui coopèrent ensemble pour donner à l'objet sa configuration. A titre d'exemple, l'objet peut prendre toutes formes diverses telles que par exemple tableaux de bord, et/ou éléments d'habillage de carrosserie de véhicules, etc.

Le procédé reprend la technique connue sous le nom de "injection-compression" qui met en oeuvre d'une part une feuille de revêtement 3, notamment de matière thermo-plastique ou textile, et d'autre part de la résine thermo-plastique, apte à constituer la couche interne 4 de l'objet.

A cet égard, on retrouve l'objet final 5 démoulé à la figure le, présentant au moins ladite couche interne 4, recouverte de ladite feuille de revêtement 3.

Cela étant, comme le montre la figure la, on place dans le moule, en particulier entre le poinçon 1 et la matrice 2, la feuille de revêtement 3 en débordement, au moins partiel, par rapport au moule 1, 2 et en particulier par rapport au poinçon 1.

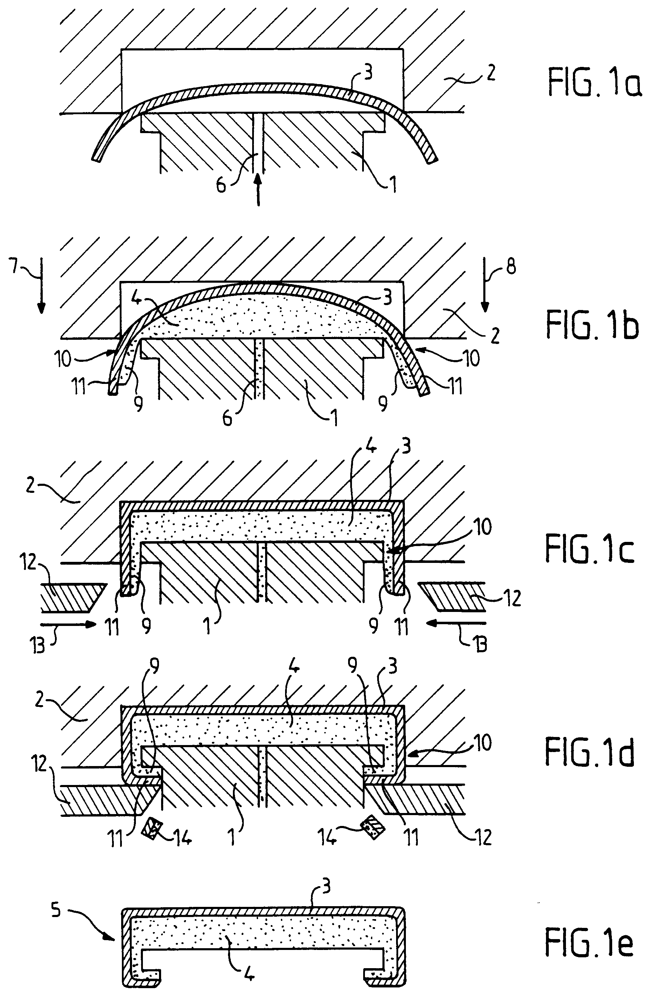

La figure 1b schématise la phase d'injection, sous ladite feuille de revêtement 3, de la résine thermo-plastique 4 en vue de la constitution de la couche interne. L'injection se réalise par un ou plusieurs canaux 6 disposés et répartis, selon la forme de l'objet à obtenir dans le poinçon 1.

A l'issue de la phase d'injection, comme le suggèrent les flèches 7, 8 de la figure 1b, la matrice 2 est rapprochée du poinçon 1, ou inversement, afin de répartir sous la feuille de revêtement 3, la résine thermo-plastique, pour constituer ladite couche interne 4, ce en créant une réserve 9 de résine thermo-plastique dans la partie périphérique 10 de l'objet.

L'étape de rembordement automatique est illustrée à la figure 1c. Alors, on applique le débord 11 de la feuille de revêtement 3 vers le moule, et en particulier le poinçon 1, en prenant en sandwich ladite réserve 9 entre la feuille de revêtement 3 et une partie du moule 1 jusqu'à la prise de la résine 4.

Ladite application du débord, telle que précisée ci-dessus, est autorisée par les moyens repérés 12 se déplaçant selon les flèches 13, qui seront décrits ultérieurement en relation avec le moule.

A l'issue de cette phase, il est envisageable en outre d'effectuer la coupe du surplus 14 de la feuille de revêtement 3, ce avant le démoulage de l'objet 5.

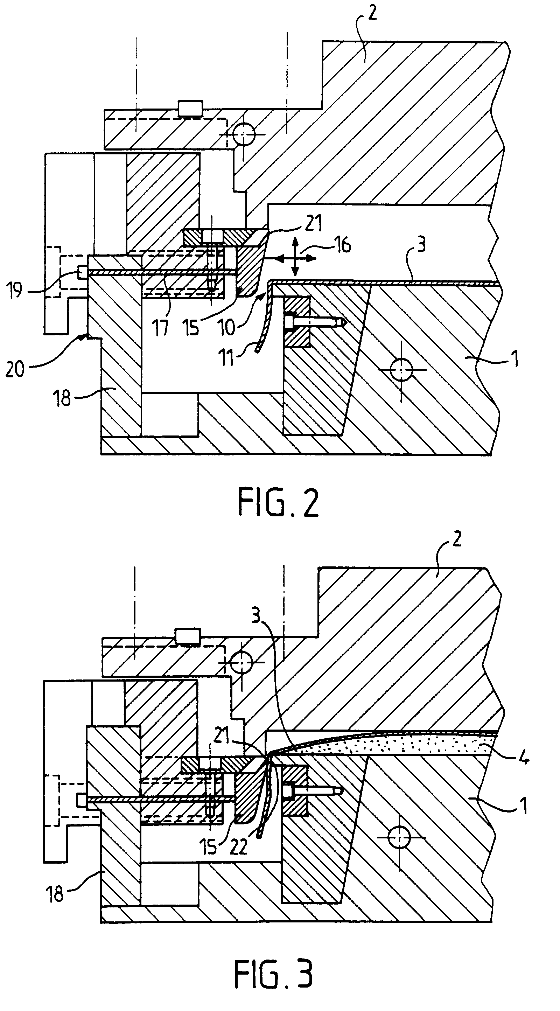

Ces phases schématiques de procédé peuvent être mises en oeuvre dans un moule de fabrication comme par exemple celui illustré aux figures 2 à 5. Afin de faciliter la compréhension, on reprendra dans ces figures les mêmes repères que précédemment pour les mêmes organes ou éléments.

C'est ainsi qu'on retrouve à la partie supérieure du moule la matrice 2, à la partie inférieure du moule le poinçon 1, entre lesquels est disposée, lorsque le moule est entrouvert, la feuille de revêtement 3.

Comme précisé ci-dessus, la feuille est disposée avec un débordement 11, le débord étant, dans le cas montré, pendant au moins partiellement par rapport au poinçon 1.

Cela étant, il est prévu des moyens pour créer une réserve 9 de résine thermo-plastique dans la partie périphérique 10 de l'objet tel qu'évoqué précédemment.

Ladite réserve 9 peut se constituer naturellement sous le débord 11 de la feuille de revêtement 3, c'est-à-dire grâce d'une part à la viscosité de la résine et du pouvoir d'adhésion de la face interne de la feuille de revêtement 3 en vis-à-vis avec la résine et d'autre part à un jeu prévu entre le chant du poinçon 1 et la partie femelle de la matrice 2, cela est particulièrement schématisé à la figure 1c.

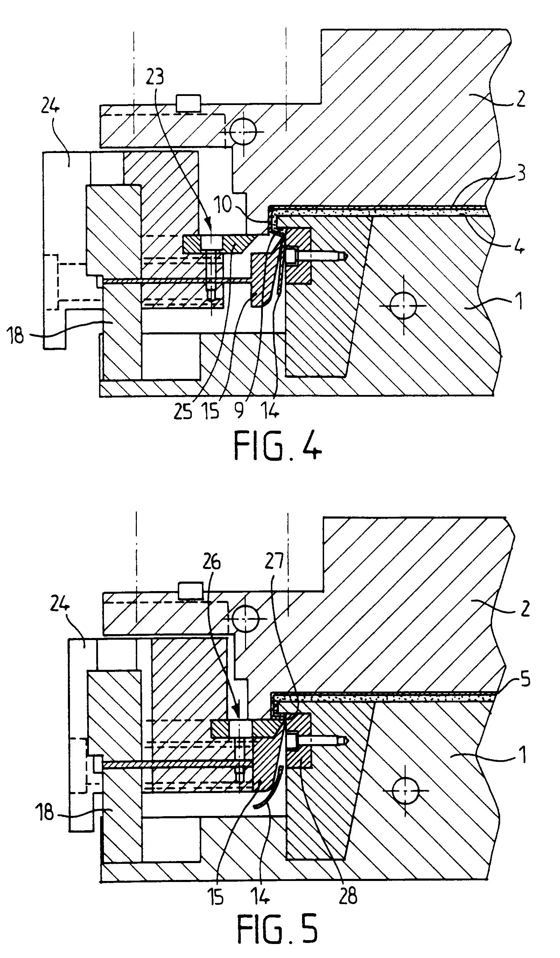

Dans une autre variante, ladite réserve est réalisée en contrôlant la feuille de revêtement, notamment par l'intermédiaire des moyens pour appliquer le débord de la feuille vers le moule évoqué précédemment, cela est particulièrement illustré aux figures 2 et 4.

Ces moyens sont par exemple constitués par un poussoir 15, coulissant et rétractable, dont les mouvements sont coordonnés d'une part avec le mouvement relatif de la matrice 2 par rapport au poinçon 1, ou inversement et d'autre part avec la forme du moule et notamment du poinçon 1.

Dans le cas des figures, le poussoir 15 est lié à la matrice 2 et apte d'une part à se déplacer de bas en haut, et de la gauche vers la droite, et inversement, comme le schématisent les flèches 16 associées au poussoir.

Sans entrer dans le détail mécanique de réalisation du poussoir 15, celui-ci est porté par une tige 17 et est actionné par un premier élément vérin, non représenté sur les figures.

Cela étant, un élément came 18, solidaire du poinçon 1, est prévu pour commander le déplacement horizontal du poussoir 15. Plus précisément, l'élément came 18 présente un profil correspondant au profil de la périphérie de l'objet recherché, et le poussoir 15 est guidé sur cette came par une butée 19 apte à coulisser verticalement et horizontalement pour suivre le profil de ladite came.

A la figure 2, il est à noter que la partie repérée 20 de la came correspond à la partie périphérique de l'objet repéré 10.

Cela étant, lors de la descente de la matrice 2 vers le poinçon 1, l'élément poussoir 15, 17, 19 coulisse vers le bas notamment par rapport à la came 18, comme le montre en particulièrement la figure 3. Dans ce cas, l'extrémité 21 du poussoir vient en contact avec le plan de joint 22 du poinçon 1, afin que la feuille de revêtement 3 soit prise en sandwich entre ces deux parties.

Lors de l'appui du poussoir 15 sur la came 18, il est à noter que l'on garde avantageusement un jeu constant et réglable entre la matrice et le poinçon. Ce jeu est destiné au serrage du revêtement sur le moule, et assure en fait l'étanchéïté pendant l'écrasement de la résine thermo-plastique. Par ailleurs, le poussoir, en épousant le profil de la came, assure à la fois l'étanchéïté et le rembordement tels qu'illustrés à la figure 4.

Ainsi, selon la présente invention, on maintient le débord 11 de la feuille sur le moule 1, ce avantageusement pendant l'injection de la résine, et après l'injection pour réaliser une étanchéïté périphérique pour la résine.

Cedit maintien peut en outre être réalisé avec une pression contrôlée afin de pouvoir, pendant la phase d'injection, constituer ladite réserve 9 comme le montre particulièrement la figure 4.

La figure 3 schématise la phase d'injection de la résine 4 sous la peau 3, le débord étant maintenu par le poussoir 15 pendant l'injection.

La figure 4 montre la phase de compression, pendant laquelle on va répartir sous la feuille de revêtement 3 la résine thermo-plastique 4 injectée. Cela est réalisé lors de la fermeture du moule c'est-à-dire plus précisément du rapprochement de la matrice 2 sur le poinçon 1.

Il est à noter que dans ces conditions, et grâce aux moyens d'application 15, on va pouvoir créer ladite réserve 9 de résine dans la partie périphérique 10 de l'objet. Dans ce cas, on réalise ledit maintien pendant le déplacement de la matrice du moule, le point de maintien étant alors coulissant sur le poinçon.

Ainsi, pendant la phase de mise en forme de l'objet, on effectue le rembordement automatique permis par l'adhésion du revêtement sur la résine thermo-plastique en phase liquide.

Cela étant, après cette phase, et après la prise de la résine, il est envisageable de couper le surplus 14 de la feuille de revêtement avant le démoulage de l'objet 5. Cela est particulièrement illustré à la figure 5. A cet effet, le moule de la présente invention comporte en outre des moyens de coupe 23 permettant cette opération.

Plus précisément, les moyens de coupe 23 se présentent sous la forme d'une part d'un coulisseau 24 porte-couteau 25, actionné par un second élément vérin, non représenté sur la figure, dont le plan de coulissement correspond au plan inférieur 26 de la matrice 2, et la ligne de coupe 27 correspond au plan d'application dudit poussoir 15.

D'autre part, les moyens de coupe 23 comportent un élément enclume 28. Aussi, après la phase d'injection-compression pendant laquelle le poussoir 15 est maintenu, le couteau 25 est pressé contre l'enclume 28 afin d'effectuer la coupe du surplus 14.

Il est à noter que dans le mode de réalisation simplifié des figures 1, lesdits moyens de coupe 12 constituent également lesdits moyens pour appliquer le débord de la feuille de revêtement vers le moule tel que cela est décrit ci-dessus.

Après une temporisation permettant une découpe complète du revêtement, le coulisseau porte-couteau recule en position initiale. Un interrupteur de position vient prendre appui sur l'arrière du poussoir et donne l'information "poussoir rentré et coulisseau porte-couteau rentré", ce qui laisse la possibilité alors d'ouvrir le moule et de démouler la pièce.

Naturellement, d'autres mises en oeuvre de la présente invention, à la portée de l'homme de l'art, auraient pu être envisagées sans pour autant sortir du cadre de la présente demande.

## Revendications

1. Procédé de fabrication d'un objet multicouche par moulage, ledit objet (5) présentant au moins une couche interne (4), à base de résine thermoplastique, recouverte d'une feuille de revêtement (3) de matière thermo-plastique ou textile, procédé par lequel
- on place dans un moule, équipé d'un poinçon (1) et d'une matrice (2), ladite feuille de revêtement (3) en débordement, avec un débord (11), au moins partiel, par rapport au moule (1, 2),
- on injecte, sous ladite feuille de revêtement (3) de la résine thermo-plastique (4)
- on répartit sous la feuille de revêtement (3) la résine thermo-plastique, pour constituer ladite couche interne (4),
- on applique le débord (11) de la feuille de revêtement (3) vers le moule (1, 2),
caractérisé par le fait que :
- on prévoit et on maintient un jeu entre un chant du poinçon (1) et une partie femelle de la matrice (2)
- on crée une réserve (9) de résine thermo-plastique, dans la partie périphérique (10) de l'objet (5), sous le débord (11) de la feuille de revêtement (3) lors de la répartition de la résine, par adhésion mutuelle
- on prend en sandwich ladite réserve (9) entre la feuille de revêtement (3) et une partie du moule (1), jusqu'à la prise de la résine.

2. Procédé selon la revendication 1, caractérisé par le fait que l'on coupe le surplus (14) de la feuille de revêtement (3) avant le démoulage de l'objet.

3. Procédé selon la revendication 1, caractérisé par le fait que l'on maintient le débord (11) de la feuille (3) sur le moule (1, 2), pendant l'injection de la résine et après l'injection, pour réaliser une étanchéïté périphérique pour la résine.

4. Procédé selon la revendication 3, caractérisé par le fait que l'on réalise ledit maintien avec une pression contrôlée.

5. Procédé selon la revendication 3, caractérisé par le fait que l'on réalise ledit maintien pendant le déplacement de la matrice du moule, le point de maintien étant alors coulissant sur le poinçon.

6. Moule de fabrication d'un objet multicouche autorisant la mise en oeuvre du procédé de fabrication selon l'une des revendications 1 à 5, ledit objet (5) présentant au moins une couche interne (4), à base de résine thermo-plastique, recouverte d'une feuille de revêtement (3), de matière thermo-plastique ou texte, ledit moule comprenant au moins une matrice (2) et un poinçon (1) coopérant pour donner à l'objet (5) sa configuration et aptes à recevoir ladite feuille de revêtement (3) en débordement avec un débord (11) au moins partiel, par rapport au moule (1, 2), ainsi que des moyens pour appliquer ledit débord (11) de la feuille de revêtement (3) vers le moule (1, 2), caractérisé par le fait qu'il comporte des moyens pour créer une réserve (9) de résine thermo-plastique dans la partie périphérique (10) de l'objet (5) et que les moyens pour appliquer le débord (11) de la feuille de revêtement (3) vers le moule (1, 2) sont prévus pour prendre en sandwich ladite réserve (9) entre la feuille de revêtement (3) et une partie du moule (1), un jeu étant prévu et maintenu entre un chant du poinçon (1) et une partie femelle de la matrice (2).

7. Moule de fabrication selon la revendication 6, caractérisé par le fait qu'il comporte en outre des moyens de coupe (23) du surplus de la feuille de revêtement (3) préalablement au démoulage.

8. Moule selon la revendication 7, caractérisé par le fait que lesdits moyens dé coupe constituent également lesdits moyens pour appliquer le débord de la feuille de revêtement (3) vers le moule.

9. Moule selon la revendication 6, caractérisé par le fait que les moyens pour appliquer le débord de la feuille de revêtement vers le moule sont constitués par un poussoir (15), coulissant et rétractable, dont les mouvements (16) sont coordonnés d'une part avec le mouvement relatif de la matrice (2) par rapport au poinçon (1), ou inversement, et d'autre part avec la forme du moule (1, 2).

10. Moule selon la revendication 9, caractérisé par le fait que ledit poussoir (15) est actionné par un premier élément vérin, et prend appui (19) sur un élément came (18) dont le profil correspond au profil de la périphérie (10) de l'objet recherché.

11. Moule selon les revendications 8 et 9, caractérisé par le fait que les moyens de coupe (23) se présentent sous la forme d'une part d'un coulisseau (24) porte-couteau (25) actionné par un second élément vérin, dont le plan de coulissement (26) correspond au plan inférieur de la matrice (2), et la ligne de coupe (27) correspond au plan d'application dudit poussoir, et d'autre part d'un élément enclume (28) en regard du couteau fixé sur le poinçon.

## Claims

1. Process for manufacturing a multi-layer object by moulding, the said object (5) having at least a thermoplastic resin based inner layer (4), covered by a covering sheet (3) of thermoplastic or textile material, a process whereby:
- the said covering sheet (3) is placed in a mould, equipped with a punch (1) and with a die (2), so as to overhang, with an, at least partial, overhanging portion (11) in relation to the mould (1, 2) ;
- thermoplastic resin (4) is injected beneath the said covering sheet (3) ;
- the thermoplastic resin (3) is distributed beneath the covering sheet (3) to constitute the said inner layer (4) ;
- the overhanging portion (11) of the covering sheet (3) is pressed against the mould (1, 2) ;
characterised by the fact that :
- a clearance is provided and maintained between one edge of the punch (1) and a female part of the die (2) ;
- a reserve (9) of thermoplastic resin is created in the peripheral part (10) of the object (5), beneath the overhanging portion (11) of the covering sheet (3), at the time of distributing the resin, by mutual adhesion.
- the said reserve (9) is sandwiched between the covering sheet (3) and a part of the mould (1), until the resin sets.

2. Process according to claim 1, characterised by the fact that the surplus (14) of the covering sheet (3) is cut off before the object is stripped from the mould.

3. Process according to claim 1, characterised by the fact that the overhanging portion (11) of the sheet (3) is held on the mould (1, 2) during injection of the resin and after injection, to produce a peripheral seal for the resin.

4. Process according to claim 3, characterised by the fact that the said holding is carried out with a controlled pressure.

5. Process according to claim 3, characterised by the fact that the said holding is carried out during the displacement of the die of the mould, the holding point then sliding over the punch.

6. Mould for manufacturing a multi-layer object permitting the implementation of the manufacturing process according to one of claims 1 to 5, the said object (5) having at least a thermoplastic resin based inner layer (4), covered by a covering sheet (4), of thermoplastic or textile material, the said mould including at least a die (2) and a punch (3) co-operating to give the object (5) its configuration, and capable of receiving the said covering sheet (3) so as to overhang with an at least partial overhanging portion (11), in relation to the mould (1, 2), as well as means for pressing the said overhanging portion (11) of the covering sheet (3) against the mould (1, 2), characterised by the fact that it comprises means for creating a reserve (9) of thermoplastic resin in the peripheral portion (10) of the object (5), and that the means for pressing the overhanging portion (11) of the covering sheet (3) against the mould (1,2) are provided to sandwich the said reserve (9) between the covering sheet (3) and a part of the mould (1), a clearance being provided and maintained between an edge of the punch (1) and a female part of the die (2).

7. Manufacturing mould according to claim 6, characterised by the fact that it further comprises means (23) for cutting off the surplus of the covering sheet (3) prior to stripping from the mould.

8. Mould according to claim 7, characterised in that the said cutting means also constitute the said means for pressing the overhanging portion of the covering sheet (3) against the mould.

9. Mould according to claim 6, characterised by the fact that the means for applying the overhanging portion of the covering sheet against the mould are constituted by a sliding, retractable pusher (15), the movements (16) of which are co-ordinated, on one hand, with the relative movement of the die (2) in relation to the punch (1), or vice versa, and, on the other hand, with the shape of the mould (1, 2

10. Mould according to claim 9, characterised by the fact that the said pusher (15) is actuated by a first jack member and bears (19) on a cam member (18), the profile of which matches the profile of the periphery (10) of the object that it is wished to manufacture.

11. Mould according to claims 8 and 9, characterised by the fact that the cutting means (23) take the form, on one hand, of a cutter block (25) slide (24) actuated by a second jack member, whereof the sliding plane (26) corresponds to the lower plane of the die (2), and the cutting line (27) corresponds to the plan of pressure of the said pusher and, on the other hand, of an anvil member (28) facing the cutter fixed on the punch.

## Patentansprüche

1. Verfahren zum Herstellen durch Formung eines mehrschichtigen Gegenstands, wobei der genannte Gegenstand (5) wenigstens eine Innenschicht (4) mit thermoplastischem Harzgehalt aufweist, die mit einer Deckfolie (3) aus thermoplastischem Material oder Textil überdeckt ist, bei welchem Verfahren
- die genannte Deckfolie (3) mit einer wenigstens teilweisen Randüberschreitung (11) bezüglich der Gußform (1, 2) herausragend in eine mit einem Stempel (1) und einer Matrize (2) versehene Gußform gelegt wird,
- thermoplastisches Harz (4) unter die genannte Deckfolie (3) gespritzt wird,
- das thermoplastische Harz unterhalb der Deckfolie (3) verteilt wird, um die genannte Innenschicht (4) zu bilden,
- der randüberschreitende Teil (11) der Deckfolie (3) zur Gußform (1, 2) hin gedrückt wird,
dadurch gekennzeichnet, daß:
- ein Spalt zwischen einer Kante des Stempels (1) und einem weiblichen Teil der Matrize (2) vorgesehen und behalten wird,
- eine thermoplastische Harzreserve (9) im Randbereich (10) des Gegenstands (5), unterhalb des randüberschreitenden Teils (11) der Deckfolie (3), während der Verteilung des Harzes, durch gegenseitige Haftung gebildet wird,
- die genannte Reserve (9) bis zur Härtung des Harzes sandwichartig zwischen der Deckfolie (3) und einem Teil der Gußform (1) gehalten wird.

2. Verfahren nach Anspruch 1, dadurch gekennzeichnet, daß die Überlänge (14) der Deckfolie (3) vor der Herausnahme des Gegenstands aus der Gußform abgeschnitten wird.

3. Verfahren nach Anspruch 1, dadurch gekennzeichnet, daß der randüberschreitende Teil (11) der Folie (3) während dem Einspritzen des Harzes und nach dem Einspritzen auf der Gußform (1, 2) gehalten wird, um eine Randbereichabdichtung für das Harz zu schaffen.

4. Verfahren nach Anspruch 3, dadurch gekennzeichnet, daß die Haltung mit einem kontrollierten Druck erfolgt.

5. Verfahren nach Anspruch 3, dadurch gekennzeichnet, daß die genannte Haltung während der Bewegung der Matrize der Gußform durchgeführt wird, wobei die Haltungsstelle dann auf dem Stempel gleitend ist.

6. Gußform zum Herstellen eines mehrschichtigen Gegenstands, die die Anwendung des Herstellungsverfahrens nach einem der Ansprüche 1 bis 5 erlaubt, wobei der genannte Gegenstand (5) wenigstens eine Innenschicht (4) mit thermoplastischem Harzgehalt aufweist, die mit einer Deckfolie (3) aus thermoplastischem Material oder Textil überdeckt ist, wobei die genannte Gußform wenigstens eine Matrize (2) und einen Stempel (1), die mit einander zusammenwirken, um dem Gegenstand (5) dessen Konfiguration zu geben, und in der Lage sind, die genannte Deckfolie (3) mit einer wenigstens teilweisen Randüberschreitung (11) bezüglich der Gußform (1, 2) herausragend aufzunehmen, und Mittel, um den genannten randüberschreitenden Teil (11) der Deckfolie (3) zur Gußform (1, 2) hin zu drücken, umfaßt, dadurch gekennzeichnet, daß sie Mittel umfaßt, um eine thermoplastische Harzreserve (9) im Randbereich (10) des Gegenstands (5) zu bilden, und daß die Mittel, um den randüberschreitenden Teil (11) der Deckfolie (3) zur Gußform (1, 2) hin zu drücken, derart vorgesehen sind, daß die genannte Reserve (9) sandwichartig zwischen der Deckfolie (3) und einem Teil der Gußform (1) gehalten wird, wobei ein Spalt zwischen einer Kante des Stempels (1) und einem weiblichen Teil der Matrize (2) vorgesehen und behalten ist.

7. Herstellungsform nach Anspruch 6, dadurch gekennzeichnet, daß sie außerdem Mittel (23) zum Abschneiden der Überlänge der Deckfolie (3) vor der Herausnahme aus der Gußform umfaßt.

8. Gußform nach Anspruch 7, dadurch gekennzeichnet, daß die genannten Schneidemittel ebenfalls die genannten Mittel, um den genannten randüberschreitenden Teil der Deckfolie (3) zur Gußform hin zu drücken, bilden.

9. Gußform nach Anspruch 6, dadurch gekennzeichnet, daß die Mittel, um den genannten randüberschreitenden Teil der Deckfolie zur Gußform hin zu drücken, aus einer gleitenden und einziehbaren Schubplatte (15) bestehen, deren Bewegungen (16) koordiniert, einerseits, mit der Relativbewegung der Matrize (2) bezüglich des Stempels (1), oder umgekehrt, und, andererseits, mit der Gestalt der Gußform (1, 2) erfolgen.

10. Gußform nach Anspruch 9, dadurch gekennzeichnet, daß die genannte Schubplatte (15) von einem ersten Hebewindeelement betätigt wird und an ein Nockenelement (18) anlehnt (19), dessen Profil dem Profil des Randbereiches (10) des erwünschten Gegenstands entspricht.

11. Gußform nach den Ansprüchen 8 und 9, dadurch gekennzeichnet, daß die Schneidemittel (23) als, einerseits, ein Messer (25) tragender Gleitblock (24), der von einem zweiten Hebewindeelement betätigt wird, dessen Gleitebene (26) der unteren Ebene der Matrize (2) und dessen Schneidlinie (27) der Andrückungsebene der genannten Schubplatte entspricht, und, andererseits, ein Amboßelement (28) gegenüber dem am Stempel befestigten Messer, ausgestaltet sind.
